# EUROPÄISCHE PATENTSCHRIFT

(11) **EP 0 609 791 B1**
(45) Veröffentlichungstag und Bekanntmachung des Hinweises auf die Patenterteilung: **16.12.1998**
(21) Anmeldenummer: 94101335.1
(22) Anmeldetag: 29.01.1994
(51) Int. Cl.: B23D 49/00, B23D 61/12

(54) **Kraftgetriebene Säge mit Schwert**
Motor saw with guide bar
Scie à moteur avec barre de guidage

(30) Priorität: 30.01.1993 DE 4302653
(43) Veröffentlichungstag der Anmeldung: 10.08.1994
(73) Patentinhaber: ROBERT BOSCH GMBH, 70442 Stuttgart (DE)
(72) Erfinder: Stäbler, Manfred-Otto, D-71111 Waldenbuch (DE); Neubert, Werner, Dipl.-Ing. (FH), D-70619 Stuttgart (DE); Dohr, Manfred, D-73734 Esslingen (DE); Warkentin, Heinz, D-71573 Allmbersbach Im Tal (DE); Schadow, Joachim, Dipl-.Ing., D-70565 Stuttgart (DE); Müller, Joachim, D-70597 Stuttgart (DE); Chanton, Marzell, CH-3924 St. Niklaus (CH); Hug, Arnold, CH-3900 Brig-Gumsen (CH); Gruber, Ivo, CH-3924 St. Niklaus (CH); Karlen, Urs, CH-3922 Stalden (CH)

(56) Entgegenhaltungen:
- EP-A- 0 267 311
- EP-A- 0 501 698
- WO-A-92/14587
- US-A- 4 379 362
- US-A- 5 016 356

## Beschreibung

### Stand der Technik

Die Erfindung geht aus von einer kraftgetriebenen Säge nach der Gattung des Anspruchs 1. Durch die EP-A1 267 311 ist eine kraftgetriebene Säge bekannt, deren Kontur im Sägeblattbereich dem Sägeblatt einer Fuchsschwanz-Handsäge ähnelt. Eine als Schwert bezeichnete, trapezförmige Stützplatte führt in ihrem unteren, nutartigen Bereich zwei hin- und hergehende Sägeblätter. Das Schwert besteht hier aus zwei flächig aufeinander befestigten Blechplatten, die die Seitenwände einer U-förmigen Nut bilden. Die Sägeblätter werden in einem Abstand zum Nutgrund der U-förmigen Nut gehalten. Sie stützen sich also nicht mit ihren Rücken in der Nut ab, sondern tragen auf ihren äußeren Flachseiten eine Stützschulter, auf die sich die Enden der Seitenwände stützen. Damit soll ein Auseinanderklaffen der Sägeblätter im Zahnbereich beim Sägen verhindert werden.

Durch die US 5.016.356 ist eine kraftgetriebene Schwertsäge bekannt, deren zwei Sägeblätter eine Orbitalbewegung ausführen, eine entsprechend winklig gestaltete Zahnseite haben und mit Ihren Vorderenden über das Vorderende des Schwerts hinausragen.

Nachteile dieser Schwertsägen sind ein verhältnismäßig hoher Herstellungsaufwand für die Sägeblätter und das Schwert, hohe Reibung zwischen Sägeblättern und Schwert, starke Erwärmung und daher verringerter Wirkungsgrad und verringerte Lebensdauer des Sägesystems. Mit den bekannten Säge ist kein Einstechen bzw. Eintauchen in ein Werkstück möglich. Außerdem ist das Auswechseln der Sägeblätter sehr zeitaufwendig.

### Vorteile der Erfindung Die erfindungsgemäße, kraftgetriebene Schwertsäge mit den kennzeichnen

den Merkmalen des Anspruchs 1 hat demgegenüber den Vorteil geringerer Reibung, höheren Wirkungsgrads des Sägesystems, einfacher Herstellung, kleiner bewegter Massen, leichten Sägeblattwechsels, hoher Lebensdauer und der Erweiterung um die Funktion des Einstechens mit hoher Präzision am vorgesehenen Einstechpunkt.

Die erfindungsgemäße Schwertsäge trägt zwei parallel zueinander mit einem Hub, gegensinnig hin- und herbewegbare Sägeblätter unverlierbar, die mit ihrem der Zahnseite gegenüberliegenden Rücken in einer nutartigen Führung im unteren Bereich des plattenförmigen Schwerts eng nebeneinander angeordnet sind. Von besonderem Vorteil ist dabei, daß an mindestens einem der vorderen Sägeblattenden auf der Zahnseite mindestens ein dem Eintauchsägen, insbesondere in Holzwerkstoffe, dienender, nur auf Zug schneidender Einstechzahn angeordnet ist, dessen Außenkante vom vorderen Sägeblattende bogenartig zum Einspannende hin gekrümmt ist, so daß eine Gleitkante für den Stoßhub gebildet wird.
Günstig für das Einstechen ist, daß der Einstechzahn mindestens so lang wie der längste der übrigen Sägezähne ist, wobei die übrigen Sägezähne Hobelzähne mit zwei Spitzen, eine für den Stoßhub, zum Vorderende des Sägeblatts weisend und die andere für den Zughub, zum Einspannende des Sägeblatts weisend, mit flachem Spanwinkel zum schälenden Schneiden gerollter, langer Späne und symmetrische Spitzzähne für Zugund Stoßhub mit großem Spanwinkel zum schabenden Schneiden kurzer Späne sind.

Dabei sind vorteilhafter Weise die Hobelzähne ungeschränkt und die Spitzzähne sind - abwechselnd - geschränkt und ungeschränkt, in der Weise, daß aufeinanderfolgend drei Spitzzähne und ein Hobelzahn, insbesondere mehrfach, angeordnet sind.

Dem leichteren Einstechen dient, daß das vordere Ende des Schwerts, insbesondere an den Seitenwänden so abgeschrägt ist, daß gegenüber dem vorderen Sägeblattende eine hochgezogene Kante gebildet wird, die als Einstechschräge dient und den Einstechzahn weiter freigibt als die übrigen Sägezähne.

Die Sägeblätter sind mit besonders einfachen Mitteln unverlierbar im Schwert geführt, indem nahe dem Vorderende des Schwerts in dessen Seitenwänden einander gegenüber und zueinander fluchtend je ein der Führung der Sägeblätter dienender Längsschlitz angeordnet ist, in den seitliche Vorsprünge der Sägeblätter eingreifen.

Das Schwert ist günstig herstellbar, indem dessen Seitenwände aus gesonderten Seitenblechen bestehen, die den Längsschlitz und die Einstech-Schräge tragen, wobei die Seitenbleche auf den Flachseiten eines Mittenblechs, insbesondere punktgeschweißt und gehärtet, angeordnet sind, und vorzugsweise durch Wärmebehandlung, vorgespannt sind, insbesondere so, daß die Unterkanten der Seitenbleche die Sägeblätter gegeneinanderpressen.

Dadurch, daß das Schwertvorderende oberhalb der Seitenwände nach hinten abgeschrägt ist, ist das Einstechen und Sägen nahe dem Vorderende des Schwerts gut kontrollierbar.

Das Schwert ist besonders verschleißfest dadurch, daß das Mittenblech auf seiner den Sägeblattrücken zugewandten Kante Vorsprünge, insbesondere gesonderte Einlegeteile aus runden, rollenfömigen, Hartmetallkörpern trägt.
Ein Sägeblatt für eine erfindungsgemäße Schwertsäge ist besonders günstig gestaltet, wenn das vordere Sägeblattende auf der Zahnseite mindestens einen, dem Eintauchsägen dienenden, auf Zug arbeitenden Einstechzahn trägt, der länger oder ebenso lang wie der längste der übrigen Sägezähne ist, wobei die übrigen Sägezähne wechselnd zueinander angeordnete, Hobelzähne mit flachem Spanwinkel und mit zwei Spitzen, eine für den Stoß- und die andere für den Zughub, und symmetrische Spitzzähne mit einer Spitze mit großem Spanwinkel für Zug- und Stoßhub, sind.

Der Unverlierbarkeit der Sägeblätter im Schwert dient, daß die seitlichen Vorsprünge einen Abstand zum vorderen Sägeblattende haben, der mindestens so lang ist wie die Hublänge und daß der seitliche Vorsprung eine, insbesondere kreisabschnitt- oder ellipsenabschnittförmige, Prägung ist, deren gerade Kontur parallel zur Zahnseite dieser zugewandt verläuft, wobei die Prägung längs zum Sägeblatt weniger breit ist als die Breite des Längsschlitzes.

Für die Unverlierbarkeit der Sägeblätter ist außerdem wichtig, daß die gerade Kontur der Prägung stufenartig, im wesentlichen lotrecht aus der äußeren Flachseite des Sägeblatts austritt und daß die gekrümmte Kontur flach in der Seitenfläche des Sägeblattes verläuft.
und/oder daß, insbesondere neben der Prägung im Sägeblattrücken eine federnde Zunge aus der Sägeblattebene in den Längsschlitz des Schwertes passend und sich darin festhaltend herausgebogen ist, insbesondere durch eine Trennfuge in Gestalt eines durchgehenden, L-förmigen Schlitzes begrenzt.

Der sicheren Ankoppelung an das Getriebe der Schwertsäge zur Hubmitnahme dient, daß das Einspannende im Sägeblattrücken eine als Rasttasche zur Sägeblattmitnahme dienende Ausnehmung trägt und daß sich am Einspannende die Außenkontur des Sägeblattes, insbesondere zu einer Spitze, verjüngt, so daß das Einspannende in Längsrichtung mindestens eine dem Einführen in Einspannmittel der Schwertsäge dienende Schrägfläche besitzt.

Die Verschleißfestigkeit der mit ihrem Rücken im Schwert gleitenden Sägeblätter wird erhöht, indem die Sägeblattrücken und/oder die Innenflächen zumindest teilweise gehärtet ist.

Die Herstellung der Sägeblätter wird dadurch vereinfacht, daß sie einstückig, mit Vorsprüngen und Ausnehmungen aus Blech, insbesondere Bandstahl, stanzbar sind.

Zum Sägen von Beton, Stein und dergl. ist die Schwertsäge mit Sägeblättern verwendbar, wenn die Sägeblätter Spitzzähne mit Hartmetall-Sägezahnspitzen tragen, die über die jeweils äußere Flachseite hinausragen und die stoffschlüssig mit der Zahnseite des Sägeblattes verbunden sind. Das Sägeblatt ist besonders einfach herstellbar, dadurch, daß die Hartmetall-Sägezahnspitzen in entsprechend bemessenen, runden Ausnehmungen der Spitzzähne angeordnete Rundkörper sind die, insbesondere nach dem Anlöten oder dergl. an den Spitzzähnen, spanend spitz geformt sind.

Weitere, vorteilhafte Ausgestaltungen der Erfindung ergeben sich aus den abhängigen Ansprüchen.

### Zeichnung

In der nachfolgenden Beschreibung sind anhand der zugehörigen Zeichnung Ausführungsbeispiele der Erfindung näher erläutert.

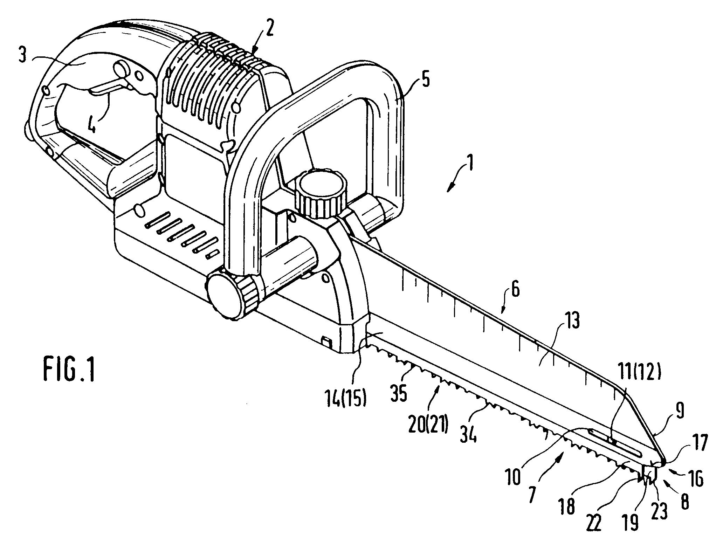

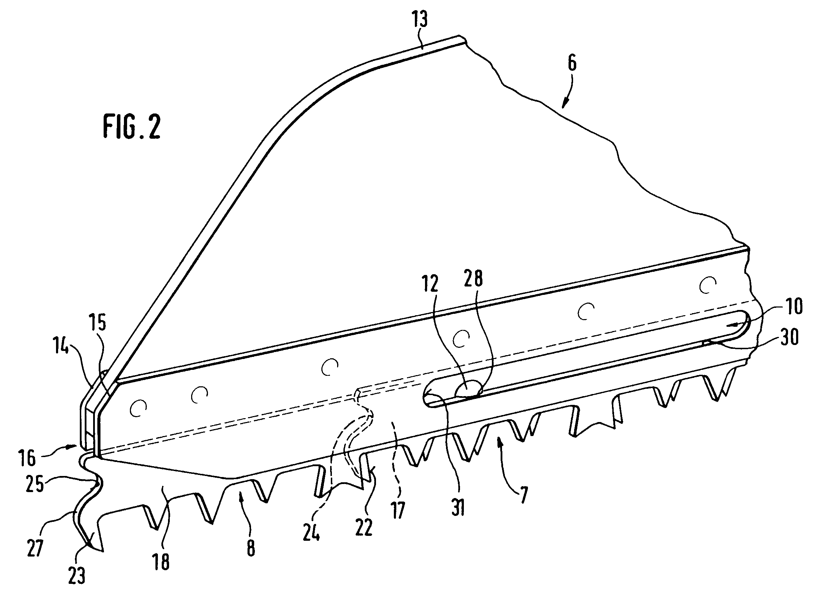

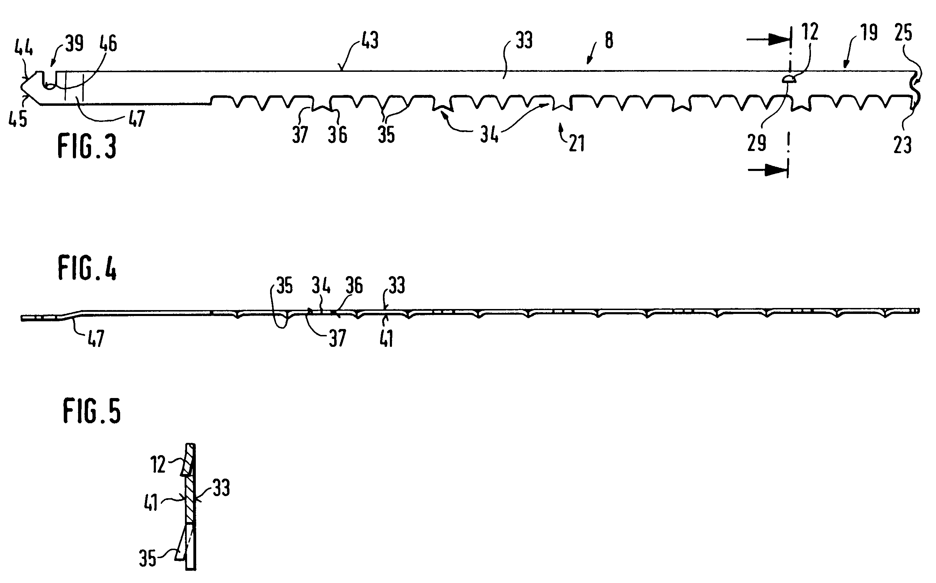

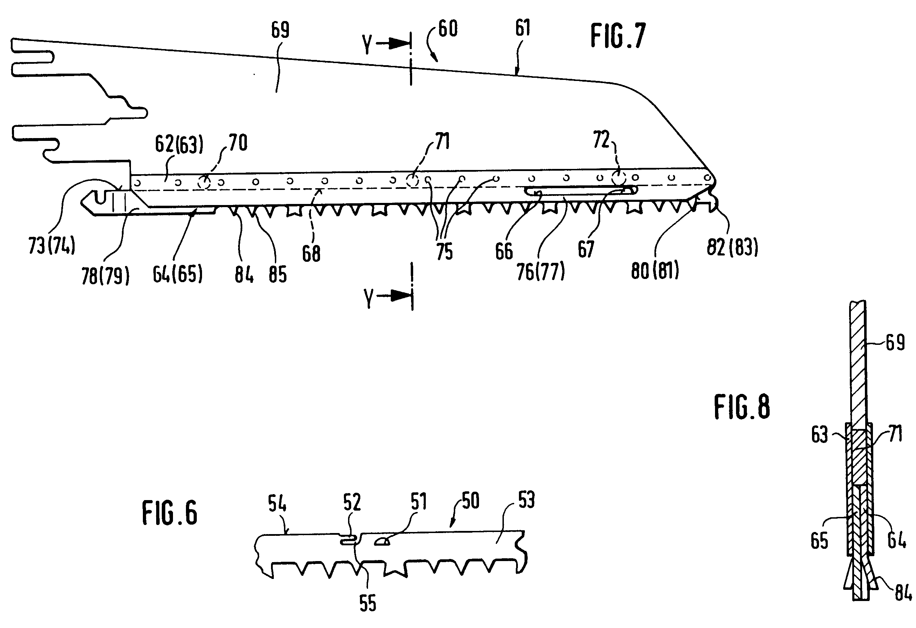

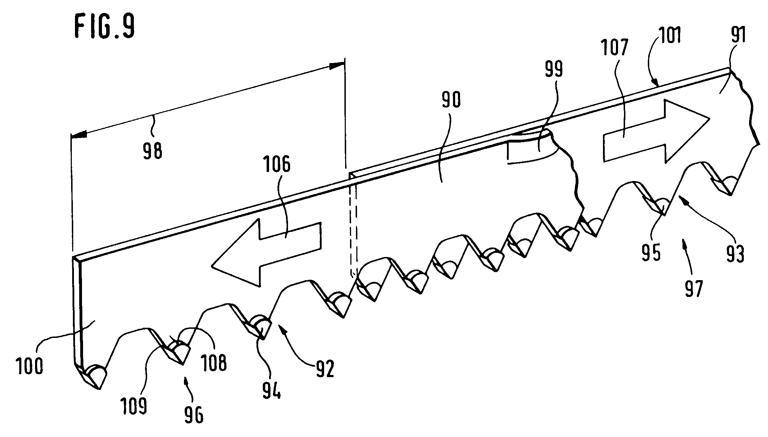

Es zeigen Figur 1 die Seitenansicht einer erfindungsgemäßen Säge, Figur 2 einen vergrößerten Ausschnitt der Schwertspitze aus Figur 1, Figur 3 die Seitenansicht eines erfindungsgemäßen linken Sägeblatts, Figur 4 die Draufsicht auf dessen Zahnseite, Figur 5 einen Querschnitt des Sägeblattes gemäß Figur 2, Figur 6 ein weiteres Ausführungsbeispiel eines Sägeblattes, Figur 7 die Seitenansicht eines erfindungsgemäßen Schwerts mit Sägeblättern, Figur 8 dessen Querschnitt und Figur 9 ein Sägeblatt mit hartmetallbesetzten Spitzzähnen zum Sägen von Stein.

### Beschreibung des Ausführungsbeispiels

Die in Figur 1 in der Seitenansicht gezeigte Schwertsäge 1 besteht aus einem Maschinengehäuse 2 mit einem Bedienhandgriff 3, mit Ein- und Ausschalter 4, einem bogenförmigen Zusatzhandgriff 5 und einem mit dem Maschinengehäuse 2 verbundenen Schwert 6, in dem hin und her verschiebbar zwei Sägeblätter 7, 8 geführt sind, die - an der Verschiebeebene betrachtet - spiegelbildlich bzw. als Paar ausgestaltet sind.
Da gemäß Figur 1 das linke Sägeblatt 8 durch das rechte Sägeblatt 7 zum Teil verdeckt ist, sind die Bezugszeichen der entsprechend dem Sägeblatt 7 nachfolgend erläuterten, am Sägeblatt 8 nicht sichtbaren Einzelheiten in Klammern gesetzt. Ebenso ist in allen nachfolgenden Figuren mit nicht sichtbaren aber symmetrisch vorhandenen Teilen bwz. deren Bezugsszeichen verfahren worden.

Am Vorderende 9 bzw. an der Schwertspitze auf beiden Seiten des Schwertes 6 ist nahe den Sägeblättern 7, 8 je ein Längsschlitz 10 angeordnet, in dem gleitsteinartig passende, vorspringende Prägungen 11, (12) der Sägeblätter 7, 8 und damit die Sägeblätter 7, 8 selbst unverlierbar geführt sind.

Das Schwert 6 besteht aus einem Mittenblech 13, das in seinem den Sägeblättern 7, 8 zugewandten Bereich beidseitig je ein Seitenblech 14, 15 trägt, zwischen denen eine nachfolgend in Figur 2 verdeutlichte Führungsnut 16 für die Sägeblätter 7, 8 gebildet wird. Die Seitenbleche 14, 15 sind im Bereich des Vorderendes 9 bzw. der Schwertspitze mit einer von den Sägeblättern 7, 8 weg, nach oben gezogenen Unterkante versehen, die als Einstechschräge 17 dient. Dadurch werden die vorderen Sägeblattenden 18, 19 in gewissem Maße seitlich freigegeben und sind günstig zu einem nichtdargestellten Werkstück positionierbar bzw. kontrollierbar.

Die vorderen Sägeblattenden 18, 19 tragen auf den Zahnseiten 20, 21 einen schnabelartig gekrümmten, nach hinten, zum Handgriff 3 weisenden Einstechzahn 22, 23.

In Figur 2 sind die Seitenbleche 14, 15 des Schwerts 6 mit dem Längsschlitz 10 und einer gleitsteinartigen Prägung 12 des Sägeblattes 8 ausschnittsweise vergrößert gezeigt. Hier wird die Führungsnut 16 und der sich jeweils an eine Rundkerbe 24, 25 anschließende und in diese mit seiner nach vorn gewölbten, kufenartigen Außenkante 26, 27 übergehende Einstechzahn 22, 23 deutlich erkennbar. Außerdem wird deutlich, daR die gerade Kante 28 der Prägung 12 auf der Unterkante 30 des Längsschlitzes 10 gleitet und das Herausfallen des Sägeblattes 8 aus dem Schwert 6 verhindert. Durch die Form der Prägungen (11), 12 können die Sägeblätter 7, 8 nicht nach unten entnommen werden, sie können jedoch nach dem Lösen von nichtdargestellten Spannmitteln der Schwertsäge 1 in Längsrichtung nach vorn aus dem Schwert 6 gezogen werden. Dabei können die Prägungen (11), 12 aus dem Längsschlitz 10 an dessen vorderen Ende 31 austreten, wobei sich die vorderen Sägeblattenden (17), 18 selbst oder die Seitenbleche 14, 15 geringfügig elastisch quer verformen. Hier wird die Anordnung und Gestaltung der Einstechzähne 22, 23 klar und daß deren Vorderkante 26, 27 im vorderen Umkehrpunkt der Sägeblätter 7, 8 bündig mit dem Vorderende 9 des Schwerts 6 abschließen. Außerdem wird die gegenseitige seitliche Abstützung der Sägeblattenden (17), 18 in der Führungsnut 16 deutlich, die vor allem über die gesamte Hublänge im Bereich des Längsschlitzes 10 bestehen muß, damit ein Eingreifen der Prägungen (11), 12 in den Längsschlitz 10 gesichert ist.

Nicht näher bezeichnete, kreisförmige Punktschweißungen auf dem Seitenblech 15 zum Mittenblech 13 sind erkennbar und nachfolgend zu Figur 7 näher erläutert.

In Figur 3 ist das, gemäß der Figuren 1 und 2, linke Sägeblatt 8 mit Draufsicht auf seine innere Flachseite 33 als Einzelheit gezeigt.

Das vordere Sägeblattende 19 mit der Rundkerbe 25 über dem Einstechzahn 23 trägt die konkave Prägung 12 mit der Kontur eines Ovalabschnitts. Dessen gerade, untere Kante 29 ist zur äußeren Flachseite 41 (Fig.4) hin stufenartig ausgebogen. Der ovale Randbereich geht graduell in die äußere Flachseite 41 über. Die Zahnseite 21 trägt in wechselnder Folge nebeneinander angeordnet zwei unterschiedliche Sägezähne: Hobelzähne 34 und Spitzzähne 35. Die Hobelzähne 34 haben zwei in Längsichtung des Sägeblatts 8 voneinander weggerichtete Spitzen 36, 37. Sie schneiden sowohl auf Zug als auch auf Stoß mit kleinem Spanwinkel und erzeugen lange, rollende Späne. Die Spitzzähne 35 schneiden gleichermaßen auf Zug und auf Stoß und erzeugen, mit großem Spanwinkel, kurze Späne.

Die in der seitl. Ansicht kürzer erscheinenden Spitzzähne 35 sind nach außen geschränkt, zur äußeren Flachseite 41 hin gebogen. Diese Schränkung bewirkt ein Gegeneinanderdrücken der Sägeblätter 7, 8 beim Schneiden, so daß diese aneinandergedrückt gleiten und sich dadurch gegenseitig stärker abnutzen als das Schwert.

Auf der dem vorderen Sägeblattende 19 entgegengesetzten Seite befindet sich das Einspannende 39 des Sägeblattes 8. Dort sind auf der Zahnseite 21 auf einem Bereich von mindestens einem Zehntel ihrer Gesamtlänge keine Sägezähne 34, 35 vorhanden. Die der Zahnseite 21 gegenüberliegende Längskante des Sägeblattes 8 bildet den Sägeblattrücken 43. Der Sägeblattrücken 43 und die Zahnseite 21 gehen im Bereich des Einspannendes 39 in zwei Schrägkanten 44, 45 winklig ineinander über. Außerdem trägt das Einspannende 39 eine U-förmige Ausnehmung in der Kontur des Sägeblattrückens 43, die als Rasttasche 46 zum Befestigen des Sägeblatts 8 an nichtdargestellten Spannmitteln der Schwertsäge 1 dient.

Der Sägeblattrücken 43 stützt sich insbesondere beim Sägen während des Hin- und Hergehens des Sägeblatts 8 gegen den Nutgrund der Führungsnut 16 ab. Dadurch, daß die Sägeblattrücken 43, (44) gehärtet sind, wird eine hohe Lebensdauer für die Sägeblätter 7, (8) erzielt. Auf der dem Einspannende 39 abgewandten Seite der Rasttasche 46 ist das Sägeblatt 8 mit einer Kröpfung 47 versehen, durch die das Einspannende 39 parallel zur äußeren Flachseite 45 hin zu dieser parallel versetzt gebogen ist. Dadurch sind die Einspannenden 38, 39 der Sägeblätter 7, 8 mit einem Abstand zueinander am Getriebe des Schwertsäge 1 geführt bzw. eingespannt, so daß sie nicht aneinander stoßen oder reiben können.

In Figur 4 ist eine Ansicht des Sägeblattes 8, gemäß Figur 3, von unten, d. h. eine Draufsicht auf die Zahnseite 21, gezeigt. Hier ist erkennbar, wie die in Figur 3 nur durch zwei nicht näher bezeichnete Biegekanten sichtbare Kröpfung 47 bezüglich der inneren und äußeren Flachseite 33, 41 verläuft.

Außerdem ist gut zu erkennen, daß die innere Flachseite 33, die sich an der entsprechenden Gegenseite, der inneren Flachseite 32 des Sägeblatts 7 abstützt, eben und ohne Vorsprünge verläuft, während die Kontur der äußeren Flachseite 41 durch die Schränkung der Spitzzähne 35 von deren nach auswärts gebogenen Spitzen überragt wird. Weiter ist durch Vergleich mit Figur 3 erkennbar, welcher der Spitzzähne 35 geschränkt ist bzw. wo die Hobelzähne 34 mit den Spitzen 36, 37 angeordnet sind.

In Figur 5 ist der Querschnitt des Sägeblattes 8 gemäß Figur 3 bzw. 4 in Richtung der Pfeile X-X gezeigt. Hier sind ebenfalls die gerade Kontur der inneren Flachseite 33, die Schränkung der Spitzzähne 35 und die nach außen stehende Prägung 12 auf der äußeren Flachseite 41 des Sägeblattes 8 deutlich erkennbar.

Die Schwertsäge 1 arbeitet auf folgende Weise: Bei Betätigen des Schalters 4 wird der nicht mitdargestellte Motor in Gang gesetzt, wodurch die Sägeblätter 7, 8 hin- und hergehend, längs in Schwert 6 geführt, bewegt werden. Dabei stützen sich die Sägeblätter 7, 8 mit ihren inneren Flachseiten 32, 33 aneinander und gleichzeitig mit den Sägeblattrücken 42, 43 auf dem Nutgrund der im Querschnitt U-förmigen Führungsnut 16 im Schwert 6 ab. Durch Eingreifen der Prägungen 11, 12 beidseitig in den zweifach angeordneten Längsschlitz 10 ist ein besonders stabiles Führen der Sägeblätter 7, 8 insbesondere im Bereich der Schwertspitze gesichert. Falls die Sägeblätter 7, 8 in einem Schnittspalt klemmen, sind sie beim Herausziehen der Schwertsäge 1 aus dem Schnittspalt entgegen der Klemmkraft sicher, unverlierbar im Schwert 6 gehalten.

Durch Aufsetzen des Einstechzahns 22, 23 bei einem Winkel des Schwerts 6 von etwa 30 ° gegenüber einer Werkstückfläche an einem festgelegten Einstechpunkt an beliebigen Stellen des Werkstücks kann, ähnlich wie mit einem Bohrer oder Fräser, mitten auf einem Werkstück eine Nut oder ein durchgehender Schlitz beliebiger Länge hergestellt werden. Zum Einstechen muß mindestens einer der am vorderen Sägeblattende angeordneten Sägezähne als Einstechzahn 22, 23 ausgebildet sein. Bei Stoßhub kann der jeweilige Einstechzahn ohne zu schneiden oder sich im Werkstück zu verhaken mit seiner Vorderkante 26, 27 über dieses gleiten, während der andere Einstechsägezahn auf Zug schneiden kann.

In der Figur 6 ist ein weiteres Ausführungsbeispiel eines linken Sägeblatts 50 gezeigt, das neben einer aus der äußeren Flachseite 51 hervorstehenden Prägung 52 entsprechend den Figuren 2 bis 4 eine ausgestanzte, federnde Zunge 53 trägt, die vom vorderen Sägeblattende 54 betrachtet hinter der Prägung im Längsschlitz eines nichtdargestellten Schwertes geführt ist und das Herausfallen des Sägeblattes 50 auch unter besonders erschwerten Sägebedingungen zuverlässig verhindert. Beim Montieren des Sägeblattes 50 im Schwert wird die Zunge 53 flach zum Sägeblatt 50 gedrückt und kann bei Anlage des Sägeblattrückens 55 auf dem Nutgrund der Führungsnut des Schwertes in dessen Längsschlitz einschnappen. Zum Herausnehmen des Sägeblattes 50 wird die Zunge 52 ebenfalls niedergedrückt. Dadurch kann die Zunge 52 im Längsschlitz des Schwerts nicht blockieren, so daß das Sägeblatt 50 in Längsrichtung aus dem Schwert herausgezogen werden kann.

Das in den Figuren 7, 8 als Seitenansicht bzw. Querschnitt entlang den Pfeilen Y-Y dargestellte Ausführungsbeispiel einer Sägeblatt- Schwert-Einheit 60 zeigt das Schwert 61 mit den Seitenblechen 62, (63), zwischen denen die Sägeblätter 64, (65) hin- und herbewegbar geführt sind. Im Längsschlitz 66 ist die Prägung 67 des rechten Sägeblattes 64 geführt. An der gestrichelt gezeichneten Unterkante 68 des Mittenblechs 69 sind Hartmetall-Einlagen 70, 71, 72 befestigt, insbesondere formschlüssig eingesetzt und gelötet. An diese stützen sich die gehärteten Sägeblattrücken 73, (74) ab. Die Seitenbleche 62, 63 sind durch Punktschweißungen 75 am Mittenblech 69 befestigt.

Unterhalb des Längsschlitzes 66 sind die stegartigen Bereiche 76, (77) der Seitenbleche 62, 63 mittels Wärmebehandlung so vorgespannt, daß diese die äußeren Flachseiten 78, (79) der Sägeblätter 64, (65) beaufschlagen, die Seitenführungskräfte verstärken bzw. seitliches Bewegungsspiel der Sägeblätter 64, (65) minimieren.
In der Schwertspitze sind die Seitenbleche 62, (63) mit je einer von den Sägeblättern 64, (65) wegweisenden als Einstechschräge dienenden Schrägkante 80, (81) versehen. Dies erleichtert die Kontrolle des Einstechens. Die nach vorn gewölbte, kufenartige Vorderkante am Einstechzahn 82, (83) läßt diesen beim Stoßhub über das Werkstück gleiten, ohne daß dort schlagartige Belastungen beim Einstechen auftreten und zu übermäßigen Belastungen des Sägeblattes, z.B. Knicken, bzw. des Getriebes oder des Motors der Säge führen. Der Einstechzahn 82, (83) schneidet nur bei Zug-Hub, so daß beim Einstechen das Sägeblatt nur auf Zug beansprucht wird.
Die nach außen gerichtete, geschränkte Zahnform der Sägezähne 84, 85 bewirkt, daß die Sägekräfte beide Sägeblätter 64, 65 gegeneinander drücken. Dies bewirkt optimales Sägen und daß der Verschleiß im wesentlichen nur an den Sägeblättern selbst und nicht am Schwert auftritt. Sägespäne können nicht zwischen die Sägeblätter gelangen.

Ein in Figur 9 dargestelltes Sägeblatt-Paar mit den Sägeblättern 90, 91 zum Sägen von Stein oder dergl. mit Spitzzähnen 92, 93 mit Hartmetallspitzen 94, 95 auf den Zahnseiten 96, 97 zeigt die Sägeblätter 90, 91 um den Hub 98 versetzt zueinander. Außerdem ist eine Prägung 99 am Sägeblatt 91 erkennbar. Die den Spitzzähnen 92, 93 zugewandten konvex gewölbten Verbindungsseiten 108 der Hartmetallspitzen 94, 95 passen in die konkav gewölbten Gegenseiten der Spitzzähne 92, 93. Dadurch ist eine Verbindung größerer Befestigungssicherheit hergestellt, als mit nichtgewölbten bzw. geraden Verbindungsseiten.

Die Stärke der Hartmetallspitzen 94, 95 ist größer als die der Sägeblätter 90, 91. Die Hartmetallspitzen 94, 95 ragen seitlich über die äußeren Flachseiten 100, 101 der Sägeblätter 90, 91 hinaus. Das ist notwendig, damit eine Sägeschnittbreite erzielt wird, die den Durchtritt des nichtdargestellten Schwerts ermöglicht. Die Pfeile 106, 107 zeigen die gegenläufige Bewegungsrichtung der Sägeblätter 90, 91.

Dadurch, daß die Sägeblattrücken zumindestens teilweise gehärtet bzw. mit gehärteten Vorsprüngen versehen sind, ist der Reibungskoeffizient zwischen dem Schwert und den Sägeblättern geringer. Die Wärmeentwicklung und Materialverformung sowie der Gleitwiderstand werden vermindert.
Die Sägeblätter können besonders kostengünstig gefertigt werden, da sie in einem Verfahrensschritt aus Blech, insbesondere aus Bandstahl, und - bis auf das Schärfen der Sägezähne - ohne weitere Nacharbeit einstückig, in einem Arbeitsgang fertiggestanzt bzw. geprägt werden können. Die dabei hergestellte Prägung bewirkt eine Profilierung im vorderen Sägeblattende und damit dessen verbesserte Biegesteifigkeit. Dies verbessert die Stabilität des Sägeblattes beim Sägen und insbesondere beim Einstechen.
Eine seitenführende, spielverringernde Wirkung auf die Sägeblätteranordnung im Schwert kann auch dadurch erreicht werden, daß die Seitenbleche auf dem Mittenblech in einer Schräglage befestigt, insbesondere geschweißt, werden, so daß ihre den Sägeblättern zugewandten Längskanten aus der Mittenblechebene auf die Sägeblätter weisen bzw. daß die den Sägeblättern abgewandten Längskanten aus der Mittenblechebene von den Sägeblättern weg verlaufen.

Die Längsschlitze in den Seitenwänden des Schwerts sind länger als der Hub der Sägeblätter und reichen über die Umkehrpunkte der Prägung der montierten Sägeblätter hinaus. Dadurch ist ein Sägeblattwechsel möglich, ohne daß sogleich beim Herausziehen der Sägeblätter aus der Führungsnut, parallel zu dieser, die Prägungen an den Enden der Längsschlitze anschlagen, sondern daß die Sägeblätter einzeln soweit innerhalb des Längsschlitzes geführt gegeneinander verschoben werden können, daß eines der vorderen Sägeblattenden gegenüber dem anderen Sägeblattende soweit vorsteht, daß es quer zur Hubrichtung bzw. normal zur Flachseite leicht gebogen werden kann, damit dessen Prägung seitlich aus dem Längsschlitz treten kann und die Entnahme des Sägeblattes nicht behindert.

Die Prägung steht etwa 0,5 bis 1 mm über die äußere Flachseite der Sägeblätter hinaus. Sie ist in einem Abstand zum vorderen Sägeblattende angeordnet, der größer ist als die Hublänge, damit die vorderen Sägeblattenden beim Betrieb der Säge sich gegenseitig im Bereich der Prägungen so abstützen, daß diese nicht normal zur Flachseite aus dem Längsschlitz austreten können, d.h. daß ein ungewolltes Lösen oder Verlieren ausgeschlossen ist.

Wichtig ist für eine lange Lebensdauer der erfindungsgemäßen Schwertsäge, daß die Sägeblätter mit ihren Rücken im Schwert entlanggleiten und besondere, verschleißgesicherte Flächen und Gegenflächen aufweisen.

Die Säge ist mit nichtdargestellten Einspannmitteln zum Befestigen bzw. Lösen der Sägeblätter zur Hubmitnahme versehen, die ohne Hilfswerkzeug bedienbar sind.

## Patentansprüche

1. Kraftgetriebene Schwertsäge (1), die zwei parallel zueinander mit einem Hub, gegensinnig hin- und herbewegbar angeordnete Sägeblätter (7, 8) mit vorderem Sägeblattende (18, 19) und gegenüberliegendem Einspannende (38, 39) unverlierbar trägt, die an einer Zahnseite (20, 21) Sägezähne (34, 35) tragen und die mit ihrem der Zahnseite (20, 21) gegenüberliegenden Sägeblattrücken (42, 43) in einer Führungsnut (16) im unteren Bereich des plattenförmigen Schwerts (6) nebeneinander geführt sind,
dadurch gekennzeichnet, daß mindestens eines der vorderen Sägeblattenden (18, 19) auf der Zahnseite (20, 21) mindestens einen dem Eintauchsägen, insbesondere in Holzwerkstoffe, dienenden, auf Zug schneidenden Einstechzahn (22, 23) trägt, der mit seiner Vorderkante (26, 27) bis zum Vorderende (9) des Schwerts (6) bewegbar ist.

2. Schwertsäge nach Anspruch 1, dadurch gekennzeichnet, daß die Vorderkante (26, 27) des Einstechzahns (22, 23) vom vorderen Sägeblattende (18,19) bogenartig zum Einspannende (38, 39) hin gekrümmt ist, insbesondere als Gleitkante dient, und daß die dem vorderen Sägeblattende (18, 19) abgewandte Innenkontur im wesentlichen gerade, schräg zum Einspannende (38, 39) hin verläuft.

3. Schwertsäge nach Anspruch 1 oder 2, dadurch gekennzeichnet, daß der Einstechzahn (22, 23) länger oder ebenso lang wie der längste der übrigen Sägezähne (34, 35) ist, wobei die übrigen Sägezähne (34, 35) wechselnd zueinander angeordnete Hobelzähne (34) mit zwei Spitzen (36, 37), eine für den Stoßhub, zum vorderen Sägeblattende (18, 19) weisend und die andere für den Zughub, zum Einspannende (38, 39) weisend, mit kleinem Spanwinkel zum schälenden Schneiden, sowie Spitzzähne (35), insbesondere symmetrisch, mit einer Spitze, für Zug- und Stoßhub mit großem Spanwinkel zum schabenden Schneiden sind.

4. Schwertsäge nach Anspruch 1, 2 oder 3, dadurch gekennzeichnet, daß die Hobelzähne (34) ungeschränkt und die Spitzzähne (35) abwechselnd geschränkt und ungeschränkt sind.

5. Schwertsäge nach Anspruch 4, dadurch gekennzeichnet, daß auf der Zahnseite (20, 21) im Wechsel aufeinanderfolgend drei Spitzzähne (35) und ein Hobelzahn (34), inbesondere in dieser Folge mehrfach, angeordnet sind.

6. Schwertsäge nach Anspruch 1, dadurch gekennzeichnet zeichnet, daß das Vorderende (18, 19) des Schwerts (6), insbesondere an seinen Seitenwänden (14, 15), so abgeschrägt ist, daß gegenüber dem vorderen Sägeblattende (18, 19) eine hochgezogene Einstechschräge (17) gebildet wird, die den Einstechzahn (22, 23) weiter freigibt als die gerade Unterkante der Seitenwände (14, 15) die übrigen Sägezähne (34, 35) freigibt.

7. Schwertsäge nach einem der Ansprüche 1 bis 6, dadurch gekennzeichnet, daß nahe dem Vorderende (9) des Schwerts (6), in dem zwischen Seitenwänden (14, 15) Sägeblätter (7, 8) hin- und herbewegbar sind, in den Seitenwänden (14, 15) einander gegenüber und zueinander fluchtend je ein der Führung der Sägeblätter dienender Längsschlitz (10) angeordnet ist, in den seitliche Vorsprünge (11, 12) der Sägeblätter (7, 8) eingreifen.

8. Schwertsäge nach Anspruch 7, dadurch gekennzeichnet, daß die Seiten wände (14, 15) des Schwerts (6) durch gesonderte Seitenbleche (14, 15) gebildet werden, die den Längsschlitz (10) und die Einstechschräge (17) tragen.

9. Schwertsäge nach Anspruch 7 oder 8, dadurch gekennzeichnet, daß die Seitenbleche (14, 15) auf den Flachseiten eines Mittenblechs (13), insbesondere punktgeschweißt befestigt und gehärtet, angeordnet sind, und, vorzugsweise durch Wärmebehandlung, vorgespannt sind, insbesondere so, daß die Unterkanten der Seitenbleche (14, 15) die Sägeblätter (7, 8) gegeneinander zu pressen suchen.

10. Schwertsäge nach Anspruch 7, 8 oder 9, dadurch gekennzeichnet, daß das Vorderende (9) des Schwerts (6) oberhalb der Seitenwände (14, 15) zum Handgriff (3) weisend abgeschrägt verläuft.

11. Schwertsäge nach Anspruch 1, dadurch gekennzeichnet, daß das Schwert (61) auf seiner den Sägeblättern (64, 65) zugewandten Unterkante (68) Vorsprünge (70, 71, 72) aufweist.

12. Schwertsäge nach Anspruch 11, dadurch gekennzeichnet, daß die Vorsprünge (70, 71, 72) durch, insbesondere runde, rollenförmige, form- und/oder kraft- und/oder stoffschlüssig mit dem Schwert (61) verbundene, Hartmetallkörper (70, 71, 72) gebildet werden.

13. Schwertsäge nach einem der vorhergehenden Ansprüche, dadurch gekennzeichnet, daß das Sägeblatt (7, 8) im vorderen Sägeblattende (18, 19) einen seitlichen Vorsprung (11, 12) trägt, dessen Abstand zum vorderen Sägeblattende (18, 19) mindestens so lang ist wie die Hublänge und daß der seitliche Vorsprung (11, 12) durch eine, insbesondere kreisabschnitt- oder ellipsenabschnittförmige, Prägung (11, 12) gebildet wird, deren gerade Kante (28, 29) parallel zur Zahnseite (20, 21) und dieser zugewandt verläuft, wobei die Prägung (11, 12) längs zum Sägeblatt (7, 8) weniger breit ist als der Längsschlitz (10).

14. Schwertsäge nach Anspruch 13, dadurch gekennzeichnet, daß die gerade Kante (28, 29) stufenartig, im wesentlichen lotrecht aus der äußeren Flachseite (40, 41) des Sägeblatts (7, 8), insbesondere in einer Trennfuge, austritt und daß die gekrümmte Kontur graduell in der äußeren Flachseite (40, 41) verläuft.

15. Schwertsäge nach Anspruch 13 oder 14, dadurch gekennzeichnet, daß, insbesondere neben der Prägung (51) im Sägeblattrücken (54), eine federnde Zunge (52) aus dem Sägeblatt (50) herausgebogen ist, die in den Längsschlitz des Schwertes (6) paßt, insbesondere durch eine Trennfuge in Gestalt eines durchgehenden, L-förmigen Schlitzes (55) begrenzt.

16. Schwertsäge nach einem der vorhergehenden Ansprüche, dadurch gekennzeichnet, daß das Einspannende (38, 39) im Sägeblattrücken (43, 44) eine als Rasttasche (46) zur Sägeblattmitnahme dienende Ausnehmung trägt und daß sich das Einspannende (38, 39), insbesondere zu einer Spitze, verjüngt.

17. Schwertsäge nach einem der vorhergehenden Ansprüche, dadurch gekennzeichnet, daß das Einspannende (38, 39) mindestens eine dem Einführen in Einspannmittel der Schwertsäge (1) dienende Schrägkante (44, 45) besitzt.

18. Schwertsäge nach einem der vorhergehenden Ansprüche, dadurch gekennzeichnet, daß der Sägeblattrücken (42, 43) und/oder die inneren Flachseiten (32, 33) zumindest teilweise gehärtet sind.

19. Schwertsäge nach einem der vorhergehenden Ansprüche, dadurch gekennzeichnet, daß das Sägeblatt (7, 8) einstückig mit Vorsprüngen (11, 12) und Ausnehmungen (46) aus Blech, insbesondere Bandstahl, fertigstanzbar ist.

20. Schwertsäge nach einem der vorhergehenden Ansprüche, dadurch gekennzeichnet, daß es Spitzzähne (92, 93) mit Hartmetall-Sägezahnspitzen (94, 95) trägt, vorzugsweise zum Sägen von Stein oder dergl., die seitlich über die äußere Flachseite (100, 101) hinausragen, und die stoffschlüssig mit der Zahnseite (96, 97) des Sägeblattes (90, 91) verbunden sind.

21. Schwertsäge nach einem der vorhergehenden Ansprüche, dadurch gekennzeichnet, daß die Hartmetall-Sägezahnspitzen (94, 95) durch Rundkörper gebildet werden, die in entsprechend ihren Verbindungsseiten (108) bemessene ausnehmungsartige Gegenseiten (109) auf der Zahnseite (96, 97) angeordnet sind, insbesondere nach dem Anlöten oder dergl. an den Spitzzähnen (92, 93), spanend spitz geformt sind.

## Claims

1. Power-driven sabre saw (1) which captively carries two saw blades (7, 8) which are arranged so as to be movable parallel to one another with a stroke in opposite directions in a reciprocating manner, have a front saw-blade end (18, 19) and an opposite, clamping end (38, 39), have saw teeth (34, 35) on a tooth side (20, 21) and, with their saw-blade back (42, 43), which is opposite the tooth side (20, 21), are guided next to one another in a guide groove (16) in the bottom region of the plate-like sabre (6), characterized in that at least one of the front saw-blade ends (18, 19), on the tooth side (20, 21), has at least one grooving tooth (22, 23), which is used for plunge-cut sawing, in particular in wooden materials, cuts with a pulling action, and can be moved with its front edge (26, 27) up to the front end (9) of the sabre (6).

2. Sabre saw according to Claim 1, characterized in that the front edge (26, 27) of the grooving tooth (22, 23) is curved in an arc-like manner from the front saw-blade end (18, 19) towards the clamping end (38, 39) and in particular serves as a sliding edge, and in that the inner contour remote from the front saw-blade end (18, 19) runs essentially in a straight line, obliquely towards the clamping end (38, 39).

3. Sabre saw according to Claim 1 or 2, characterized in that the grooving tooth (22, 23) is longer than, or just as long as, the longest of the other saw teeth (34, 35), the other saw teeth (34, 35) being planing teeth (34), which have two points (36, 37), one for the pushing stroke, pointing towards the front saw-blade end (18, 19), and the other for the pulling stroke, pointing towards the clamping end (38, 39), having a small rake angle for cutting with a paring action, and pointed teeth (35), in particular symmetrical, having one point, for the pulling and pushing stroke, having a large rake angle for cutting with a scraping action, the planing teeth (34) and the pointed teeth (35) being arranged so as to alternate with one another.

4. Sabre saw according to Claim 1, 2 or 3, characterized in that the planing teeth (34) are not set and the pointed teeth (35) are alternately set and not set.

5. Sabre saw according to Claim 4, characterized in that three pointed teeth (35) and one planing tooth (34) are arranged so as to follow one another alternately, in particular repeatedly in this sequence.

6. Sabre saw according to Claim 1, characterized in that the front end (18, 19) of the sabre (6), in particular at its side walls (14, 15), is bevelled in such a way that a raised grooving bevel (17) is formed relative to the front saw-blade end (18, 19), which grooving bevel (17) exposes the grooving tooth (22, 23) to a greater extent than the straight bottom edge of the side walls (14, 15) exposes the other saw teeth (34, 35).

7. Sabre saw according to one of Claims 1 to 6, characterized in that, close to the front end (9) of the sabre (6), in which saw blades (7, 8) can be moved in a reciprocating manner between side walls (14, 15), a longitudinal slot (10) which serves to guide the saw blades and in which lateral projections (11, 12) of the saw blades (7, 8) engage is arranged in each of the side walls (14, 15), the longitudinal slots (10) being arranged opposite one another and in alignment with one another.

8. Sabre saw according to Claim 7, characterized in that the side walls (14, 15) of the sabre (6) are formed by separate side plates (14, 15), which have the longitudinal slot (10) and the grooving bevel (17).

9. Sabre saw according to Claim 7 or 8, characterized in that the side plates (14, 15) are arranged on the flat sides of a centre plate (13), in particular in such a way as to be fastened by spot welding and hardened, and are prestressed, preferably by heat treatment, in particular in such a way that the bottom edges of the side plates (14, 15) attempt to press the saw blades (7, 8) against one another.

10. Sabre saw according to Claim 7, 8 or 9, characterized in that the front end (9) of the sabre (6) runs above the side walls (14, 15) in a bevelled manner towards the handle (3).

11. Sabre saw according to Claim 1, characterized in that the sabre (61) has projections (70, 71, 72) on its bottom edges (68) facing the saw blades (64, 65).

12. Sabre saw according to Claim 11, characterized in that the projections (70, 71, 72) are formed by, in particular, round, roller-shaped carbide bodies (70, 71, 72) which are connected to the sabre (61) in a positive-locking and/or frictional and/or integral manner.

13. Sabre saw according to one of the preceding claims, characterized in that the saw blade (7, 8) has in the front saw-blade end (18, 19) a lateral projection (11, 12), of which the distance from the front saw-blade end (18, 19) is at least as long as the stroke length, and in that the lateral projection (11, 12) is formed by an, in particular, circle-segment-shaped or ellipse-segment-shaped embossment (11, 12), the straight edge (28, 29) of which runs parallel to the tooth side (20, 21) and so as to face the latter, the embossment (11, 12) being less wide along the saw blade (7, 8) than the longitudinal slot (10).

14. Sabre saw according to Claim 13, characterized in that the straight edge (28, 29) emerges in a step-like manner, in particular perpendicularly, from the outer flat side (40, 41) of the saw blade (7, 8), in particular in a parting line, and in that the curved contour runs gradually into the outer flat side (40, 41).

15. Sabre saw according to Claim 13 or 14, characterized in that a flexible tongue (52) is bent out of the saw blade (50) in particular next to the embossment (51) in the saw-blade back (54), which flexible tongue (52) fits into the longitudinal slot of the sabre (6) and is bounded in particular by a parting line in the form of a continuous, L-shaped slot (55).

16. Sabre saw according to one of the preceding claims, characterized in that the clamping end (38, 39) in the saw-blade back (43, 44) has a recess serving as a catch pocket (46) for driving the saw blade, and in that the clamping end (38, 39) tapers, in particular to a point.

17. Sabre saw according to one of the preceding claims, characterized in that the clamping end (38, 39) has at least one bevelled edge (44, 45) used for guiding into clamping means of the sabre saw (1).

18. Sabre saw according to one of the preceding claims, characterized in that the saw-blade back (42, 43) and/or the inner flat sides (32, 33) are at least partly hardened.

19. Sabre saw according to one of the preceding claims, characterized in that the saw blade (7, 8) can be finish-blanked, together with projections (11, 12) and recesses (46), in one piece from sheet metal, in particular steel strip.

20. Sabre saw according to one of the preceding claims, characterized in that it has pointed teeth (92, 93) having carbide saw-tooth points (94, 95), preferably for sawing stone or the like, which carbide saw-tooth points (94, 95) project laterally beyond the outer flat side (100, 101) and are connected integrally to the tooth side (96, 97) of the saw blade (90, 91).

21. Sabre saw according to one of the preceding claims, characterized in that the carbide saw-tooth points (94, 95) are formed by round bodies which are arranged in recess-like mating sides (109), dimensioned in accordance with the connecting sides of the carbide saw-tooth points (94, 95), on the tooth side (96, 97) and are shaped so as to have a cutting point, in particular after being brazed or the like to the pointed teeth (92, 93).

## Revendications

1. Scie à moteur avec barre de guidage (1), portant de manière imperdable deux lames (7, 8) se déplaçant parallèlement en va et vient dans des sens opposés, comportant chacune une extrémité avant de sciage (18, 19), une extrémité arrière de fixation (38, 39) et sur un côté denté (20, 21) des dents de sciage (34, 35), tandis que du côté opposé, les lames sont guidées l'une à côté de l'autre, par leurs dos (42, 43) coulissant dans une rainure de guidage (16) située à la partie inférieure de la barre de guidage (6) en forme de plaque,
caractérisée en ce qu' au moins une des extrémités avant (18, 19), sur le côté denté (20, 21), porte une dent de plongée (22, 23) coupant en traction et servant à scier en plongée, dans du bois en particulier, cette dent pouvant être déplacée jusqu'à ce que son bord avant (26, 27) atteigne l'extrémité avant (9) de la barre de guidage (6).

2. Scie selon la revendication 1,
caractérisée en ce que
le bord avant (26, 27) de la dent de plongée (22, 23) est recourbé en arc dirigé de l'extrémité de sciage (18, 19) vers l'extrémité de fixation (38, 39), ce bord servant en particulier de bord de glissement, tandis que le contour de la lame situé à l'opposé de l'extrémité (18, 19) est essentiellement droit et en pente vers l'extrémité de fixation (38, 39).

3. Scie selon la revendication 1 ou 2,
caractérisée en ce que
la dent de plongée (22, 23) a une longueur supérieure ou égale à celle de la plus longue des dents de scie (34, 35) qui sont composées d'une suite alternée d'une part de dents de rabotage (34) ayant deux pointes (36, 37) l'une travaillant en attaque vers l'extrémité avant (18, 19) de la lame, l'autre travaillant en traction vers l'extrémité de fixation (38, 39), les deux dents présentant un faible angle de coupe pour couper en enroulement, d'autres part de dents en pointe (35), symétriques en particulier, dont la pointe coupe en traction et en poussée, avec un fort angle de coupe opérant par raclage.

4. Scie selon les revendications 1, 2 ou 3,
caractérisée en ce que
les dents de rabotage (34) sont non avoyées et les dents en pointe (35) sont alternativement avoyées et non avoyées.

5. Scie selon la revendication 4,
caractérisée en ce que
sur le côté denté (20, 21) se succèdent alternativement trois dents en pointe (35) et une dent de rabotage (34), répétées en particulier un certain nombre de fois.

6. Scie selon la revendication 1,
caractérisée en ce que
l'extrémité avant (18, 19) de la barre de guidage (6), en particulier le long de ses parois latérales (14, 15) est inclinée de manière à créer, par rapport à l'extrémité avant de lame (18, 19) une rampe (17) dirigée vers le haut qui donne à la dent de plongée (22, 23) plus de dégagement que ne le donne aux autres dents (34, 35) le bord rectiligne des parois latérales (14, 15).

7. Scie selon une des revendications 1 à 6,
caractérisée en ce que
près de l'extrémité avant (9) de la barre de guidage (6) les lames de scie (7, 8) peuvent coulisser en va et vient entre des parois latérales (14, 15) dans lesquelles sont découpées face à face avec alignement, des fentes longitudinales (10) servant à guider les lames et dans lesquelles sont en prise des saillies (11, 12) portées par les lames (7, 8).

8. Scie selon la revendication 7,
caractérisée en ce que
les parois latérales (14, 15) de la barre de guidage (6) sont constituées par des tôles (14, 15) portant chacune une fente longitudinale (10) et une rampe (17).

9. Scie selon la revendication 7 ou 8,
caractérisée en ce que
les tôles latérales (14, 15) sont montées sur les côtés plans d'une tôle médiane fixée en particulier par soudure par points et durcie, elles sont avantageusement précontraintes par traitement thermique, en particulier de manière à amener les bords inférieurs des tôles latérales (14, 15) à presser les lames de scie (7, 8) l'une sur l'autre.

10. Scie selon l'une des revendications 7, 8 ou 9,
caractérisée en ce que
l'extrémité avant (9) de la barre de guidage (6), au-dessus des parois latérales (14, 15) est en pente montante en direction de la poignée de manoeuvre (3).

11. Scie selon la revendication 1,
caractérisée en ce que
la barre de guidage (61) présente des saillies (70, 71, 72) sur son bord inférieur (68) situé en face des lames de scie (64, 65).

12. Scie selon la revendication 11,
caractérisée en ce que
les saillies (70, 71, 72) sont constituées par des corps en métal dur (70, 71, 72), en particulier rond, ou en forme de galet, reliés par combinaison de formes et/ou de matière, et/ou par la force, à la barre de guidage (61).

13. Scie selon une des revendications précédentes,
caractérisée en ce que
chaque lame de scie (7, 8) porte vers son extrémité avant (18, 19) une saillie latérale (11, 12) espacée de cette extrémité d'une distance au moins égale à la course de la lame, cette saillie étant constituée par une empreinte (11, 12) ayant en particulier la forme d'une partie de cercle ou d'ellipse et dont le bord rectiligne (28, 29) est parallèle au côté denté (20, 21) et dirigé vers lui, la dimension de l'empreinte (11, 12) selon la direction longitudinale de la lame (7, 8) étant intérieure à celle de la fente longitudinale (10).

14. Scie selon la revendication 13,
caractérisée en ce que
le bord rectiligne (28, 29) forme un gradin dressé essentiellement perpendiculairement à la face plane externe (40, 41) de la lame (7, 8) en particulier dans un joint de séparation, son contour courbe s'effaçant graduellement dans la face (40, 41).

15. Scie selon une des revendications 13 ou 14,
caractérisée en ce que
dans le dos (54) de la lame, près de l'empreinte (51) une languette élastique (52) fait saillie en arc sur la lame (50) pour se loger de manière ajustée dans la fente longitudinale de la lame, cette languette étant délimitée en particulier par une séparation constituée par une fente continue (55) en forme de L.

16. Scie selon une des revendications précédentes,
caractérisée en ce que
l'extrémité de fixation (38, 39) porte, sur le dos (43, 44) de la lame un évidement servant d'encoche d'arrêt (46) pour l'entraînement de la lame, l'extrémité de fixation (38, 39) allant en se rétrécissant, en pointe notamment.

17. Scie selon une des revendications précédentes,
caractérisée en ce que
l'extrémité de fixation (38, 39) possède au moins un bord incliné (44, 45) servant à l'engagement de la lame dans un moyen de fixation de la scie (1).

18. Scie selon une des revendications précédentes,
caractérisée en ce que
le dos (42, 43) de la lame et/ou les faces plates internes (32, 33) sont durcies au moins en partie.

19. Scie selon une des revendications précédentes,
caractérisée en ce que
la lame de scie (7, 8) est réalisée par découpage/estampage en une seule pièce avec les saillies (11, 12) et les évidements (46), à partir d'une tôle, en particulier une bande d'acier.

20. Scie selon une des revendications précédentes,
caractérisée en ce qu'
elle porte des dents en pointe (92, 93) dont les pointes (94, 95) sont en métal durci, pour couper de préférence de la pierre ou un matériau analogue, ces pointes (94, 95) débordant latéralement la surface plate externe (100, 101) de la lame et étant reliées au côté denté (96, 97) de la lame de scie (90, 91) par combinaison de matières.

21. Scie selon une des revendications précédentes,
caractérisée en ce que
les pointes en métal durci (94, 95) sont des corps ronds montés sur des contreportées (109) évidées dans le côté denté (96, 97) à des dimensions correspondant aux côtés de liaison (108) de ces corps qui, après brasage ou opération analogue les fixant sur les dents (92, 93), sont usinés en pointes de taillage de copeaux.
